# EUROPEAN PATENT APPLICATION

(11) **EP 1 473 218 A1**
(43) Date of publication of application: **03.11.2004**
(21) Application number: 04007923.8
(22) Date of filing: 01.04.2004
(51) Int. Cl.: B62M 1/00, B62K 3/00

(54) **By a walking movement driven bicycle**

(30) Priority: 30.04.2003 IT PN20030030
(71) Applicant: Lovatello, Floriano, 31058 Susegana (TV) (IT); Olivotto, Benito, 31058 Susegana (TV) (IT)
(72) Inventor: Lovatello, Floriano, 31058 Susegana (TV) (IT); Olivotto, Benito, 31058 Susegana (TV) (IT)
(74) Representative: Dalla Rosa, Adriano

(57) **Abstract**

Bicycle for transporting a person, comprising at least a support frame (2) provided with a front wheel (3) and a rear driving wheel (4), adapted to transmit the motive power to the ground. Bicycle where the support frame (2) is shaped with enlarged configuration, such that to support a rotating carpet (5), co-operating with said driving wheel (4) and driven on a sole advancement direction by the walking movement of the user disposed over the same rotating carpet.

## Description

The present application relates to a bicycle adapted to transport a person, the displacement of which in the territory is determined by a walking movement of the same user.

Bicycles of conventional kind for transporting a person are known, in which the user disposed on a seated position interposed between the two wheels, through an alternate and vertical movement of the legs and suitable movement transforming mechanical means transmits a rotary movement to the wheels of the same bicycle. These bicycles of known type are realized to permit the displacement of a person through a territory to be effected in an effective, easy and comfortable manner. In fact, the bicycles of known type are provided with a saddle for a comfortable and easy sitting of the user and mechanical means adapted to transform the leg vertical movement into a rotary movement of the driving wheel, which means are designed in advance so as to diminish the effort of the user depending on the covered space. To this purpose, the movement transforming mechanical means are provided with speed change gears in order to adapt the effort to be accomplished to the user physical characteristics. Rotary carpets commonly called "tapis roulant", for performing a movement activity of walking type are known, wherein the user performs a walking movement such a walk or a run on a rotary carpet. The rotary carpets of known type are provided with a ring-shaped closed belt mounted idle on a sliding surface or entrained by a proper driving motor, providing for the belt rotation speed and consequently the walking movement. Generally, they are used for walking activities for rehabilitating or walking or running in the interior of closed rooms and with small dimensions. It is easy to perceive that the walking or running activity on a rotating carpet does not permit to take pleasure of the respiratory benefits of a movement activity on an open space.

The present invention has the object to provide for a bicycle permitting to perform easy, speedy and facile displacements in the own territory by using as a propulsive movement a user walking movement. This bicycle is realized with the substantially described constructive characteristics, with particular reference to the enclosed claims of the present patent.

The invention will be better understood from the following description, given solely by way of not limitative example and with reference to the accompanying drawings, wherein :
- Fig. 1 shows a left side view of a bicycle according to the invention;
- Fig. 2 shows a perspective left side view of the bicycle of Fig. 1 ;
- Fig. 3 shows a plan view of the rolls onto which the rotating belt of the bicycle of Fig. 1 is laid;
- Fig. 4 shows a perspective view of the rotating carpet of the bicycle of Fig. 1 ;
- Fig. 5 shows a perspective view of a pair of rolls for driving the bicycle of Fig. 1;
- Fig. 6 shows a perspective view of a part of the movement driving mechanism for the bicycle of Fig. 1.

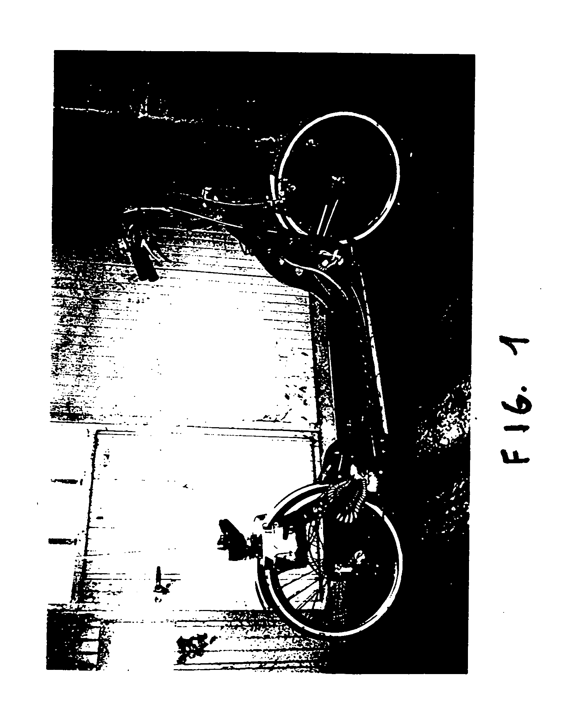

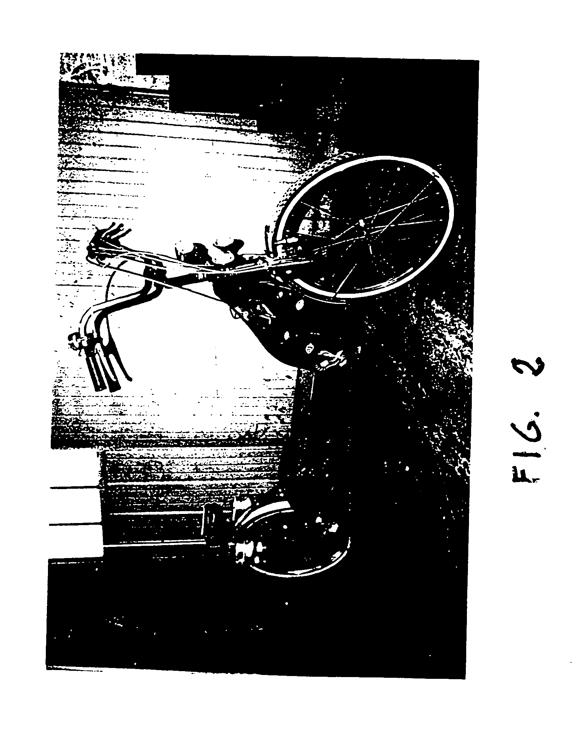

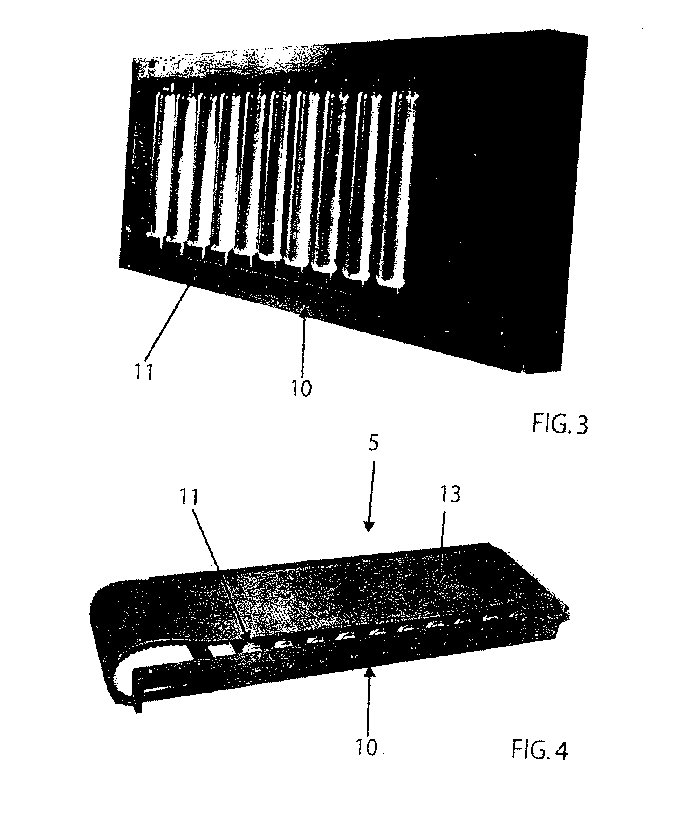

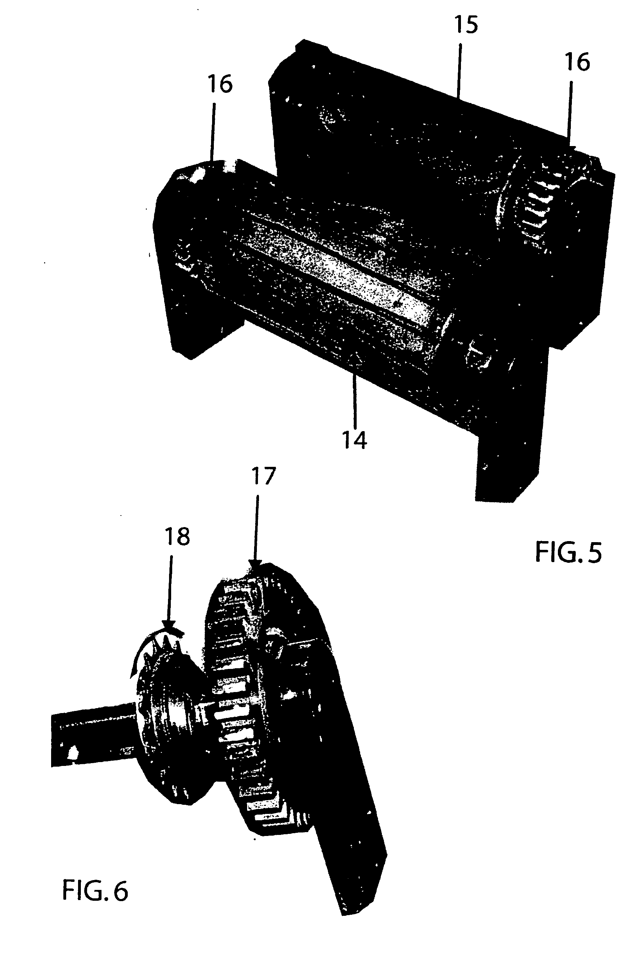

The above mentioned Figs. 1-6 represent a bicycle 1 according to the invention adapted to permit a speedy displacement of a person in the interior of the territory, in which the displacement propulsive force is provided by a walking movement of the same user, such a bicycle being constituted by a support frame 2 adapted to support a rotating carpet 5, and at the ends of which there are secured by proper joining means (not shown) a steering handlebar 6, adapted to support the needed control means and to permit a safe and correct drive of the front wheel 3, fits to permit to steer the same bicycle 1, and a rear driving wheel 4 adapted to transmit the propulsive force to the ground. In particular, with reference to Figs. 1, 2, 3 and 4, it is noted that the support frame 2 is constituted by a front element 7 formed substantially by a metallic reticular structure, adapted to support by means of suitable and known joining and fixing means (not shown) the steering wheel 3 and the handlebar 6, and a rear element 8 formed substantially by a metallic reticular structure adapted to support the driving wheel 4 by means of suitable and known joining and fixing means (not shown) and a part of the mechanical means of known type for transmitting and transforming the movement (not shown), and a central element 10 formed substantially by a metallic reticular structure made integral with or fixed to both the front element 7 and the rear element 8 by means of common and known fixing means (not shown), and adapted to support a set of idle rolls 11 and 20 and a movement driving roll 12. In turn, the rotating belt 13 shaped as a closed ring is installed externally the surface of the idle rolls 11 and 20 and the driving roll 12, and its function is to transmit the movement impressed by the user directly on to the outer surface of the rotating belt 13 to the driving roll 12, which transmits the movement to the driving wheel 4 through suitable and common transmission means. The idle roll 20 is mounted on a seat shaped as a slot, on a position opposite to the driving roll 12, and secured to the support frame 2 by means of proper and common fixing and regulating means, so as to be able to change the longitudinal position thereof for determining the correct tensioning level of the rotating belt 13. This driving roll 12 is shaped with an outer surface 14 and 15 which, as shown on Fig. 5, are adapted to the movement transmission directly to the inner surface of the rotating carpet 5, so as to avoid any possible skidding between the two surfaces, and is provided laterally with a coaxial driving gear 16 for the movement transmission to a driven gear 17, shown on Fig. 6. The rotation movement impressed to the driven gear 17 by the driving gear 16 is transmitted to the driving wheel 4 through a chain of common type, not shown, which is mounted directly on the driving pinion gear 18 which is coaxial to and integral with the driven gear 17 and on the driven pinion gear 19 which is coaxial to and integral with the driving wheel 4. Of course, the bicycle 1 according to the invention is provided with all commonly used fittings adapted to improve the user safety and the use facility Now, it is described hereinafter the manner in which the bicycle 1 according to the invention is used, which anyway is easy and intuitive. First of all, the use of the bicycle needs that the user be arranged with an erect position, which is different than the conventional seated position on a common bicycle, and that he grips in a firm and safe manner the handlebar 6 for driving the bicycle correctly and safely. Thereafter, the user will begin to produce a walking movement, with a walking or running frequency, over the rotating carpet 5, in accordance with its own capacities. The user walking movement impresses to the rotating carpet 5 a rotating movement, which in turn is transmitted through the driving roll 12, the driving gear 16, the chain, the driving pinion gear 18 and the driven pinion gear 19, to the driving wheel 4 whose thrust on the ground permits to obtain the speedy displacement of the bicycle and the user in the territory. Obviously, the elements forming the bicycle 1 may be shaped also with shapes and aesthetical and decorative appearances which are different than those indicated by way of example only, and thus without departing from the protection sphere of the present invention.

## Claims

1. Bicycle for transporting a person comprising at least a support frame (2), adapted to support a front wheel (3) directly controlled by a handlebar (6) and a rear driving wheel (4) adapted to transmit the motive power to the ground, **characterized in that** said support frame (2) is made with an enlarged configuration, such that to support movement means such as at least a rotating carpet (5), co-operating with said driving wheel (4) and driven on a sole advancement direction by the walking movement of the user disposed on to the same rotating carpet.

2. Bicycle according to claim 1, **characterized in that** said rotating carpet (5) is constituted by a rotating belt (13) installed onto a central element (10) of said frame (2) and co-operating with a set of idle rolls (11, 20) and a driving roll (12) secured by means of per se known means to said central element (10).

3. Bicycle according to claim 2, **characterized in that** said driving roll (12) is provided laterally with a driving gear (16) transmitting the movement to said driving wheel (4) through a driven gear (17) and a chain of common type mounted on to a driving pinion gear (18) and a driven pinion gear (19).

4. Bicycle according to claim 2, **characterized in that** said idle roll (20) is mounted on a seat shaped as a slot of said central element (10) of said support frame (2), by means of per se known fixing means permitting a longitudinal displacement of said idle roll (20), so as to determine the correct tensioning level of said rotating belt (13).
